# EUROPÄISCHE PATENTSCHRIFT

(11) **EP 0 910 954 B1**
(45) Veröffentlichungstag und Bekanntmachung des Hinweises auf die Patenterteilung: **05.11.2003**
(21) Anmeldenummer: 98116072.4
(22) Anmeldetag: 26.08.1998
(51) Int. Cl.: A22C 11/02

(54) **Darmfüllvorrichtung sowie Maschine zum Füllen von Wurst-Därmen**
Method and machine for stuffing sausage meat
Procédé et machine de bourrage de la chair à saucisses

(30) Priorität: 22.10.1997 DE 29718684 U
(43) Veröffentlichungstag der Anmeldung: 28.04.1999
(73) Patentinhaber: VEMAG MASCHINENBAU GmbH, 27283 Verden (DE)
(72) Erfinder: Hiller, Klaus, 27313 Dörverden (DE); Zerbst, Oliver, 27283 Verden/Walle (DE)
(74) Vertreter: Eisenführ, Speiser & Partner

(56) Entgegenhaltungen:
- EP-A- 0 121 761
- EP-A- 0 568 372
- DE-U- 29 517 333
- US-A- 1 366 183
- US-A- 2 863 167
- US-A- 5 512 012

## Beschreibung

Die vorliegende Erfindung betrifft eine Darmfüllvorrichtung für eine Maschine zum Füllen von Wurst-Därmen, mit einem um seine Längsachse dreh- und antreibbaren Füllrohr, auf das ein durch das Füllrohr befüllbarer Darm aufziehbar ist, und mit einer gleichzeitig mit dem Füllrohr drehbaren Darmmitnahmeeinrichtung zum Drehen des Darms.

Die Erfindung betrifft ferner eine Maschine zum Füllen von Wurst-Därmen, mit einem Vorratsbehälter für Wurstbrät, einer mit dem Vorratsbehälter verbundenen Fördervorrichtung zum Fördern von Würstbrät und mit einer Darmfüllvorrichtung, die ein um seine Längsachse dreh- und antreibbares Füllrohr, auf das ein durch das Füllrohr befüllbarer Darm aufziehbar ist, und eine gleichzeitig mit dem Füllrohr drehbare Darmmitnahmeeinrichtung zum Drehen des Darms aufweist.

Darmfüllvorrichtungen sowie Füllmaschinen dieser Art sind bekannt. Die Darmfül-Ivorrichtung ist Teil einer Füllmaschine, mit deren Hilfe Wurstbrät in Därme aus Kunststoff (Kunstdarm) oder Naturdarm eingefüllt werden kann und der Darm derart "abgedreht" werden kann, daß separierbare gefüllte Abschnitte möglichst gleicher Länge und gleichen Gewichts entstehen, die voneinander getrennt werden können, um einzelne Würstchen zu bilden.

Vor dem Füllen des Darms wird dieser im gerafften Zustand (geraupt) auf das Füllrohr aufgezogen. Während des Füllens mit Wurstbrät durch das Füllrohr mit Hilfe der Fördervorrichtung in Form einer Pumpe wird der Darm an einem Ende seines geraupten Abschnitts mit Hilfe des mit Druck in den Darm hineingepressten Wurstbräts abgezogen. Ist eine einstellbare Menge von Wurstbrät in den Darm eingefüllt worden, wird zum Abdrehen des Darms das um seine Längsachse drehbar gelagerte Füllrohr mit Hilfe eines Antriebs gedreht. Gleichzeitig wird der geraupte, auf das Füllrohr aufgezogene Darm gedreht, während der Darm im Bereich des freien Endes des Füllrohres, aus dem das Wurstbrät ausgestoßen werden kann, mit Hilfe einer sogenannten Darmbremse festgehalten und auf diese Weise an einer Mitdrehung mit dem auf dem Füllrohr aufgezogenen Darm gehindert wird. Auf diese Weise wird der Darm an einer Einschnür- oder Abdrehstelle abgedreht. Nach dem Abdrehen wird die Drehung des Füllrohrs unterbrochen, und eine Menge an Wurstbrät wird erneut durch das Füllrohr in den Darm unter Abziehung des Darms eingefüllt. Anschließend wird erneut der Abdrehvorgang gestartet. Auf diese Weise können einzelne, portionierte Würste hergestellt werden.

Die Darmmitnahmeeinrichtung dient während des Abdrehens zum Mitnehmen des auf das Füllrohr aufgezogenen Darms, d. h. zum Mitrotieren des Darms zusammen mit dem Füllrohr. Bei einer aus dem Gebrauchsmuster DE-U-92 11 979.4 bekannten Darmfüllvorrichtung ist die Mitnahmeeinrichtung in Form einer Klammer oder eines Clips vorgesehen, die bzw. der den auf das Füllrohr aufgeschobenen, entraupten (oder entrafften) Darm durch reibschlüssige Verbindung auf dem Füllrohr festklemmt. Durch das Festklemmen mit Hilfe des Clips wird der auf das Füllrohr aufgeschobene Darm zusammen mit dem Füllrohr während der Abdrehphase rotiert. Die Verbindung zwischen Darm und Füllrohr ist jedoch im Betrieb, wie die Praxis gezeigt hat, nachteilig, da ein großer Schlupf zwischen Darm und Füllrohr während der Drehung auftreten kann, so daß die Abdrehung des Darms an der Abdrehstelle unzureichend ist oder die Abdrehzeiten verlängert werden würden. Insbesondere aufgrund von Dickenänderungen des Darms über seine Länge können ungleichmäßige Reibungskräfte zwischen Clip, Darm und Füllrohr entstehen, die für eine ungleichmäßige Mitnahme des Darms sorgen.

Die Mitnahmeeinrichtung in Form eines Clips weist ferner den Nachteil auf, daß sie während des Betriebs und des damit einhergehenden Abziehens des Darms manuell in Richtung auf das freie Ende des Füllrohres geschoben werden muß. Nur auf diese Weise kann eine vollständige Ausnutzung des aufgezogenen Darmes erreicht werden. Wird der Darm nicht manuell verschoben, was im Betrieb häufig unterbleibt, so wird der Darm nur unvollständig verbraucht, so daß ein Darmrest übrig bleibt, der nicht gefüllt werden kann. Dies führt zu einer unnötigen Verschwendung. Unterbleibt das manuelle Verschieben der Darmmitnahmeeinrichtung, kommt es häufig zum Platzen des Darms, da dieser sich um das Füllrohr wickelt. Schließlich hat sich gezeigt, daß der Clip, der als etwa C-förmiger Ring ausgebildet ist, so daß er auf das Füllrohr aufgesteckt werden kann, während des Betriebs von dem Füllrohr abgeschleudert wird. Daraus resultiert eine erhebliche Verletzungsgefahr und der Betrieb muß unterbrochen werden, um einen neuen Darm aufzuziehen und Verunreinigungen zu entfernen.

Bei einer aus dem Gebrauchsmuster DE-U-29 51 733.5 bekannten Darmmitnahmeeinrichtung ist ein zylindrisches Rohr an einem hinteren Ende des Füllrohres, welches der Darmauslaßöffnung gegenüber liegt, starr mittels eines Zylinderstücks mit dem Füllrohr verbunden. Das auf diese Weise starr mit dem Füllrohr verbundene koaxial zu dem Füllrohr angeordnete Rohr überträgt die Drehbewegung des Füllrohres starr auf einen elastischen Mitnahmering, der im Bereich des vorderen Endes des Füllrohres den Darm auf das Füllrohr preßt, um den Darm gemeinsam mit dem Füllrohr zu rotieren. Diese Mitnahmeeinrichtung weist den Nachteil auf, daß das äußere Rohr sich über eine große Länge des Füllrohres vom hinteren zum vorderen Ende erstreckt und dadurch eine große Masse und Massenträgheit aufweist, die einer Beschleunigung oder Verzögerung des Füllrohres entgegen wirken. Auch ist die starre Befestigung des Rohres an dem Füllrohr verhältnismäßig aufwendig. Eine axiale Beweglichkeit des Mitnahmerings relativ zum Füllrohr ist ausgeschlossen. Im Zwischenraum zwischen der äußeren Oberfläche des Füllrohrs und der inneren Oberfläche des äußeren Rohres sammelt sich im Falle eines Platzens des Darms eine große Menge an Wurstbrät an, die aufwendig entfernt werden muß. Ferner weist das äußere Rohr einen großen Durchmesser auf. Aufgrund der großen Masse des äußeren Rohres entstehen Unwuchten, die zu Vibrationen führen können, die wiederum große Lagerbeanspruchungen hervorrufen. Insgesamt ist die bekannte Mitnahmeeinrichtung konstruktiv aufwendig und teuer.

Aus der US 5,512,012 ist eine Füllvorrichtung bekannt, bei welcher der auf das Füllrohr aufgefädelte Darm mittels einer längsgeschlitzten, elastischen Hülse gegen das Füllrohr gedrückt wird. Auf diese Weise wird der Darm - zumindest bis zu einem bestimmten Betrag - gegenüber dem Füllrohr rotationsgesichert. Die Vorrichtung weist den Nachteil auf, dass bei Einwirken größerer Drehmomente dennoch eine Verdrehung des Darms auf dem Füllrohr auftreten kann. Weiterhin unterstützt diese Vorrichtung den Vorschub nicht.

Aus den europäischen Offenlegungsschriften EP 0 568 372 und EP 0 121 761 sind Abfüllmaschinen bekannt, bei denen mittels eines mechanisch aufwendigen und voluminösen Spindelantriebs eine konzentrisch zum Füllrohr liegende Hülse vorgeschoben werden kann, um den auf das Füllrohr aufgefädelten Darm in Richtung der Abfüllöffnung vorzuschieben. Diese Vorrichtungen weisen den Nachteil auf, dass der Darm, wenn das Füllrohr rotiert, gegenüber der feststehenden Hülse verwunden wird und somit eine Beschädigung des Darms auftreten kann. Diese Vorrichtungen gewährleisten daher keinen sicheren Vorschub des Darms, wenn dieser, wie zur Erzeugung von Abdrehstellen erforderlich, durch eine überlagerte Drehbewegung beansprucht wird.

Der vorliegenden Erfindung liegt die Aufgabe zugrunde, die Nachteile des Standes der Technik zu vermeiden und eine Darmfüllvorrichtung sowie eine Maschine zum Füllen von Wurst-Därmen bereitzustellen, die auf konstruktiv einfache und sichere Weise eine weitgehend vollstängige Entraupung des Darm ermöglichen.

Diese Aufgabe wird erfindungsgemäß bei einer Darmfüllvorrichtung sowie bei einer Maschine zum Füllen von Wurst-Därmen der eingangs genannten Art dadurch gelöst, daß die Darmmitnahmeeinrichtung axial beweglich relativ zu dem Füllrohr angeordnet und zum Übertragen eines Drehmomentes im wesentlichen formschlüssig mit dem Füllrohr gekoppelt ist.

Die Erfindung zeichnet sich dadurch aus, daß die Darmmitnahmeeinrichtung zum Drehen des Darms axial beweglich und gleichzeitig formschlüssig mit dem Füllrohr gekoppelt ist, um ein Drehmoment von dem Füllrohr auf die Darmmitnahmeeinrichtung und von dieser auf den Darm zu übertragen. Dadurch ist eine sichere schlupffreie Rotation des Darms mit Hilfe der Darmmitnahmeeinrichtung möglich. Durch die axiale Beweglichkeit kann die Darmmitnahmeeinrichtung während der Füllung und während des Abdrehens eines Wurst-Darms entlang dem Füllrohr axial "wandern". Beispielsweise ist die Darmmitnahmeeinrichtung zu Beginn der Füllung des Darms am hinteren, von der Austrittsöffnung für Wurstbrät beabstandeten Ende des Füllrohrs angeordnet und bewegt sich langsam während des Füllens des Darms in Richtung auf das vordere, die Austrittsöffnung für Wurstbrät aufweisende Ende des Füllrohrs, was aufgrund der axial beweglichen Anordnung der Darmmitnahmeeinrichtung ohne weiteres möglich ist. Ist der Darm weitgehend verbraucht, ist die Darmmitnahmeeinrichtung im Bereich des vorderen Endes des Füllrohrs angeordnet. Die erfindungsgemäße Darmmitnahmeeinrichtung ermöglicht eine vollständige Ausnutzung des aufgezogenen Darms, ohne daß wesentliche Teile des Darms ungefüllt und somit unausgenutzt blieben.

Durch die drehfeste Kopplung der Darmmitnahmeeinrichtung mit dem Füllrohr und die gleichzeitige Fixierung des Darms an der Darmmitnahmeeinrichtung wird der Darm zusammen mit dem Füllrohr gedreht, ohne daß eine separate Darmantriebseinrichtung erforderlich wäre, wie dies bei Darmfüllvorrichtungen im Stand der Technik erforderlich ist. Die Erfindung gewährleistet eine sichere und gleichmäßige Darmmitnahme während des Abdrehens.

Eine besonders bevorzugte Ausführungsform der Erfindung zeichnet sich dadurch aus, daß die Darmmitnahmeeinrichtung mindestens einen Vorsprung und das Füllrohr außen mindestens eine axial verlaufende Nut aufweist, um die formschlüssige und gleichzeitig axial bewegliche Verbindung zwischen Mitnahmering und Füllrohr herzustellen. Mit Hilfe des Vorsprungs und der axial an dem Füllrohr verlaufenden Nut ist auf konstruktiv einfache Weise eine formschlüssige, drehfeste Verbindung zur Übertragung eines Drehmoments von dem Füllrohr auf die Darmmitnahmeeinrichtung verwirklicht. Alternativ könnte an dem Füllrohr ein Vorsprung und an der Mitnahmeeinrichtung eine axial verlaufende Nut ausgebildet sein. Die axial verlaufende Nut, die im Außenbereich des Füllrohrs vorgesehen ist, erstreckt sich im wesentlichen entlang der gesamten Länge des Füllrohrs. Auf diese Weise kann das gesamte Füllrohr zum Aufziehen eines geraupten Darmes ausgenutzt werden. Vor dem vorderen Ende des Füllrohrs, das die Austrittsöffnung für Wurstbrät aufweist, kann die Nut enden, so daß die Darmmitnahmeeinrichtung eine Art Anschlag aufweist, so daß die axiale Beweglichkeit begrenzt ist. Auf diese Weise kann ein ungewolltes Abfallen der Mitnahmeeinrichtung von dem Füllrohr verhindert werden.

Gemäß einer bevorzugten Weiterbildung der Erfindung ist die Darmmitnahmeeinrichtung im wesentlichen als ein koaxial zum Füllrohr angeordneter Darm-Mitnahmering ausgebildet. Durch die Ausbildung als koaxial zum Füllrohr angeordneter Mitnahmering ergibt sich eine konstruktiv besonders einfache und kostengünstige Ausgestaltung. Der Mitnahmering kann in vorteilhafter Weise aus einem Kunststoff bestehen, der nur eine geringe Masse, aber eine große Festigkeit aufweist, um einerseits eine sichere Darmmitnahme zu gewährleisten und gleichzeitig den relativ großen Fliehkräften widerstehen zu können. Mögliche Unwuchten wirken sich hierbei kaum aus. Der Mitnahmering ist ferner einfach herstellbar.

Gemäß einer weiteren bevorzugten Ausführungsform der Erfindung ist mindestens eine Fixierschraube in den Mitnahmering einschraubbar, deren vorderer Abschnitt den Vorsprung bildet und teilweise in der an dem Füllrohr ausgebildeten Nut angeordnet ist. Auch diese Ausführungsform gewährleistet eine einfache drehfeste Verbindung zwischen dem Darmmitnahmering und dem Füllrohr. Die Form der Nut an dem Füllrohr kann dabei der Form des vorderen Abschnitts der Fixierschraube angepaßt sein. Zweckmäßigerweise sind zwei gegenüberliegende Fixierschrauben an dem Mitnahmering ausgebildet, um für einen Ausgleich von Fliehkräften und damit für nur minimale Unwuchten zu sorgen.

Vorteilhafterweise ist die Fixierschraube als Madenschraube ausgebildet, die in eine mit einem Gewinde versehene Bohrung in dem Mitnahmering anschraubbar ist und im eingeschraubten Zustand nicht von der äußeren Kontur des Mitnahmerings absteht. Auf diese Weise können Verletzungsrisiken minimiert werden. Gemäß einer Weiterbildung der Erfindung ist die Fixierschraube mittels einer Konterschraube oder einer sich verfestigenden Sicherungsmasse, die in die Gewindebohrung eingebracht werden kann, gegen unerwünschtes Lösen gesichert, um ein Verletzungsrisiko weiter zu minimieren.

Eine vorteilhafte Ausführungsform der Erfindung zeichnet sich dadurch aus, daß die Darmmitnahmeeinrichtung mindestens ein Andruckmittel zum im wesentlichen reibschlüssigen oder formschlüssigen Fixieren des Darms an der Darmmitnahmeeinrichtung aufweist. Das Andruckmittel sorgt für eine Übertragung des Drehmoments von der Darmmitnahmeeinrichtung auf den Darm, um diesen gemeinsam mit dem Füllrohr zu drehen. In vorteilhafter Weise ist das Andruckmittel als elastisch verformbarer Klemmring ausgebildet, der vorzugsweise an dem Mitnahmering befestigt ist. Mit Hilfe eines elastisch verformbaren Klemmrings kann auf einfache und schnelle Weise eine sichere, im wesentlichen reibschlüssige Verbindung zwischen der Darmmitnahmeeinrichtung, vorzugsweise des Mitnahmerings und dem zu füllenden Darm hergestellt werden. Der Klemmring kann beispielsweise in den geraupten Darm eingedrückt oder an diesen angedrückt werden.

Die Erfindung wird weitergebildet, indem der Mitnahmering einen sich im wesentlichen radial erstreckenden Verbindungsabschnitt zur Herstellung der Verbindung zum Füllrohr und einen sich im wesentlichen axial erstreckenden Fixierabschnitt zur Aufnahme der Andruckmittel zum Fixieren des Darms aufweist. Auf diese Weise läßt sich eine einfache Konstruktion verwirklichen. Gemäß einer Weiterbildung sind der sich im wesentlichen radial erstreckende Verbindungsabschnitt und das Andruckmittel so beabstandet, daß zwischen beiden ein Abschnitt des geraupten Darmes angeordnet sein kann. Auch auf diese Weise läßt sich eine einfache und sichere Verbindung des Darms herstellen.

Eine alternative bevorzugte Ausführungsform der Erfindung sieht vor, daß in dem sich im wesentlichen axial erstreckenden Fixierabschnitt auf der dem Füllrohr montierten Zustand zugewandten Innenseite eine Nut zur Aufnahme des Andruckmittels angeordnet ist. Mittels der Nut wird das Andruckmittel auf konstruktiv einfache und zuverlässige Weise an dem Mitnahmering befestigt.

Gemäß einer weiteren bevorzugten Ausführungsform ist vorgesehen, daß eine weitere Nut auf der dem Füllrohr zugewandten Innenseite des Fixierabschnitts angeordnet ist. In die weitere Nut kann ein Fixierelement im Form einer sogenannten Darmhaltelippe befestigt werden. Ist eine derartige Darmhaltelippe in der zweiten Nut befestigt, so ist die Vorrichtung besonders zur Abfüllung von einem Lebensmittel in einen Kollagendarm angepaßt. Bei dieser Ausführungsform wird gewährleistet, daß Kollagendarmraupen vollständig abgedreht und somit vollständig aufgebraucht werden können.

Eine Weiterbildung der Erfindung zeichnet sich ferner dadurch aus, daß der Fixierabschnitt mindestens eine Durchgangsbohrung als Sichtfenster aufweist. Durch die vorzugsweise mehreren Bohrungen kann ein Benutzer von außen auf den geraupten Darm durch den Mitnahmering hindurchsehen, so daß dieser während der Portionierung sichtbar ist. Auch diese Maßnahme gewährleistet, daß der Darm bis zur letzten Portion ausgenutzt wird. Darüber hinaus kann der Darm-Mitnahmering durch die Bohrungen von außen gut gereinigt werden, beispielsweise indem Spülwasser von außen hineingespritzt wird.

In einer weiteren Ausführungsform wird die Erfindung weitergebildet durch eine im Bereich des freien Endes des Füllrohrs angeordnete Darmbremse zum Hindern des Drehens des Darmes in diesem Bereich. In vorteilhafter Weise weist die Darmbremse einen mit dem Füllrohr zusammenwirkenden Bremsring auf. Der Darm ist zwischen dem Bremsring und dem Füllrohr eingeklemmt und kann an einer definierten Abdrehstelle abgedreht werden. Die Abdrehstelle kann einerseits "vor dem Rohr", d. h. vor dem Füllrohr liegen. In diesem Fall weist der Bremsring einen konischen Einschnürabschnitt auf, der vor dem vorderen Endabschnitt des Füllrohrs angeordnet ist und für ein reibschlüssiges Abbremsen oder Festhalten des Darms sorgt. Andererseits kann der Bremsring einen elastischen Lippenabschnitt aufweisen, der mit der äußeren Oberfläche des Füllrohrs derart zusammenwirkt, daß zwischen dem elastischen Lippenabschnitt und dem Füllrohr der Darm reibschlüssig festgehalten wird. Diese Ausgestaltung wird auch als Abdrehen mit Außenbremse oder Abdrehen "auf dem Rohr" bezeichnet.

Bei der erfindungsgemäßen Maschine zum Füllen von Wurst-Därmen, die in besonders bevorzugter Weise mit einer Darmmitnahmeeinrichtung gemäß den zuvor beschriebenen bevorzugten Ausführungsformen ausgebildet ist, lassen sich im wesentlichen die gleichen Vorteile erreichen wie bei einer Darmfüllvorrichtung der zuvor beschriebenen Art, so daß zur Vermeidung von Wiederholungen auf die vorstehenden Beschreibungen Bezug genommen wird. Vorteilhafte Weiterbildungen und bevorzugte Ausführungsformen sind in den Unteransprüchen und der nachfolgenden Beschreibung beschrieben.

Die Erfindung wird nachstehend anhand von Ausführungsbeispielen unter Bezugnahme auf die beiliegenden Figuren beschrieben.

Es zeigen:
- Fig. 1: eine Maschine zum Füllen von Wurst-Därmen mit einer erfindungsgemäßen Darmfüllvorrichtung in einer Seitenansicht;
- Fig. 2: eine erfindungsgemäße Darmfüllvorrichtung für eine Maschine gemäß Fig. 1 in einer Draufsicht mit Teilschnittdarstellung;
- Fig. 3: die in den Fig. 1 und 2 dargestellte Darmfüllvorrichtung mit einem Darmmitnahmering in Teilschnittdarstellung mit aufgezogenem Darm;
- Fig. 4: die Darstellung aus Fig. 3 ohne aufgezogenem Darm;
- Fig. 5: ein alternatives Ausführungsbeispiel einer Darmbremse für eine erfindungsgemäße Darmfüllvorrichtung;
- Fig. 6: ein Füllrohr 14 mit zwei gegenüberliegenden Nuten;
- Fig. 7: ein alternatives Ausführungsbeispiel einer Darmfüllvorrichtung in einer Schnittdarstellung;
- Fig. 8: ein alternatives Ausführungsbeispiel einer Darmmitnahmeeinrichtung;
- Fig. 9: ein Teil einer Darmmitnahmeeinrichtung;
- Fig. 10: ein alternatives Ausführungsbeispiel einer Darmfüllvorrichtung in einer Schnittdarstellung;
- Fig. 11: der in Fig. 10 dargestellte Darm-Mitnahmering in einer vergrößerten Darstellung.

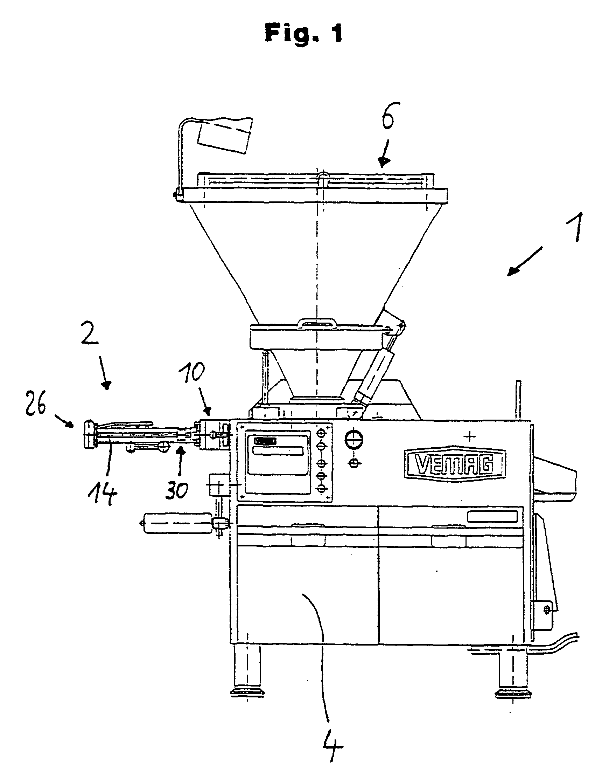

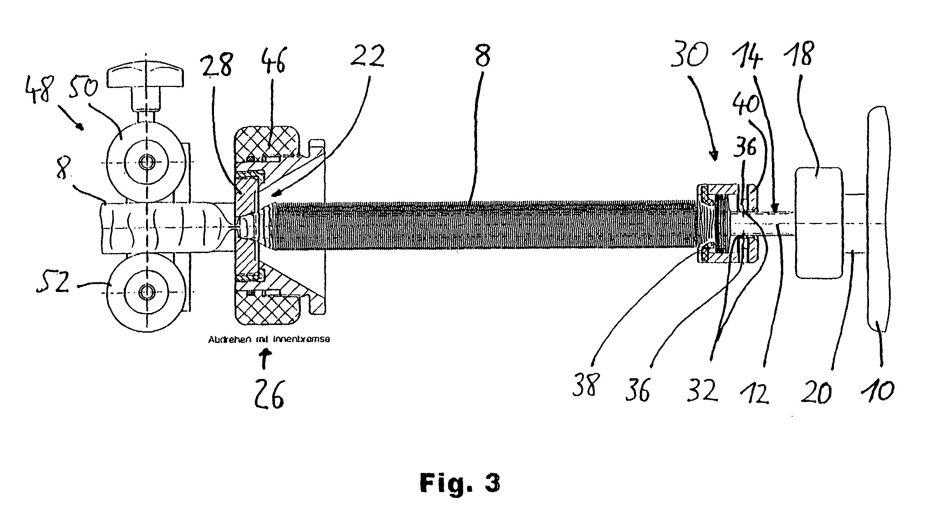

In Figur 1 ist eine Maschine 1 zum Füllen von Wurst-Därmen gezeigt, die eine erfindungsgemäße Darmfüllvorrichtung, die Teil der Füllmaschine 1 ist. Die Füllmaschine 1 umfaßt einen verkleideten Rahmen 4 zur Aufnahme und Befestigung einer Fördervorrichtung zum Fördern von Wurstbrät aus einem Vorratsbehälter in Form eines Fülltrichters 6, Antriebe und Steuerungs- und Regelungseinrichtungen sowie Bedieneinrichtungen zum Bedienen der Füllmaschine 1. In dem Fülltrichter 6 enthaltenes Wurstbrät wird mittels der Fördervorrichtung der Darmfüllvorrichtung 2 zugeführt, mit deren Hilfe der zu füllende Wurst-Darm 8 (vgl. Figur 3) mit Wurstbrät gefüllt und der gefüllte Darm abgedreht werden kann, so daß einzelne portionierte Würste entstehen.

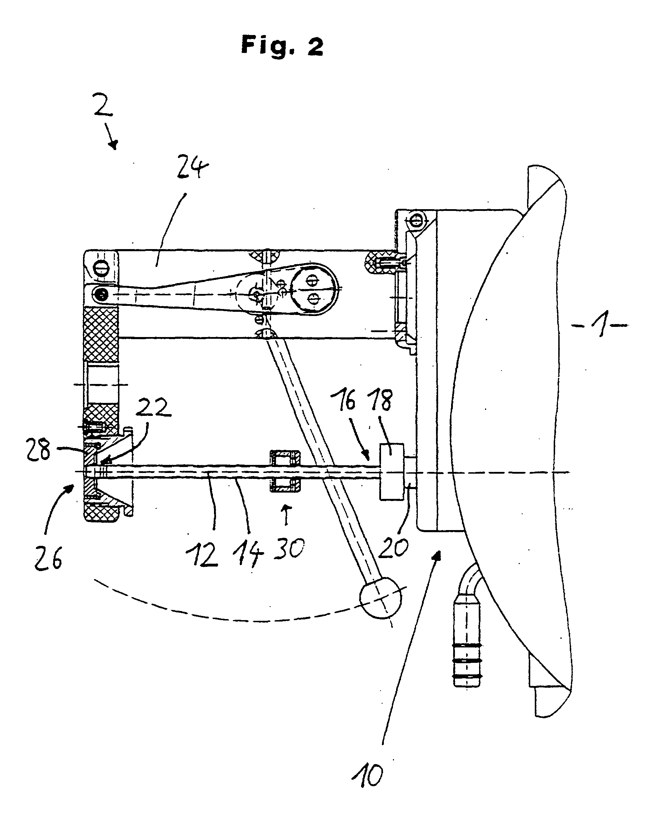

Die in Figur 2 in einer Draufsicht dargestellte Darmfüllvorrichtung 2 ist Teil der in Figur 1 dargestellten Füllmaschine 1. Die Darmfüllvorrichtung 2 ist fest mit einem an den Rahmen 4 montierten Abdrehgetriebe 10 (siehe auch Figur 1) verbunden und weist ein gerades um seine Längsachse 12 drehbares und unter Zwischenschaltung des Abdrehgetriebes 10 mit Hilfe eines Antriebs (nicht dargestellt) antreibbares Füllrohr 14 auf, auf das ein durch das Füllrohr 14 mit Wurstbrät füllbarer Darm 8 (vgl. Figur 3) aufziehbar ist. Das Füllrohr 14 ist an seinem hinteren Ende 16 mittels einer Füllrohrmutter 18 mit einer Hohlwelle 20 verschraubt oder angeflanscht und wird bei Rotation der Hohlwelle 20 mit Hilfe des Antriebs um die Längsachse 12 in Drehung versetzt. An seinem freien, vorderen Ende 22 weist das hohle Füllrohr 14 eine Abgabe- oder Austrittsöffnung zum Abgeben von durch das Füllrohr 14 hindurchströmenden Wurstbrät auf. Mit Hilfe der Fördervorrichtung kann Wurstbrät durch die Hohlwelle 20 durch das Füllrohr 14 und die Austrittsöffnung 23 in einen zu füllenden Darm 8 (siehe Figur 3) unter Druck gefördert werden, der teilweise auf das Füllrohr 14 aufgezogen ist. Über dem Rohr 14 ist der Darm 8 im wesentlichen im gerafften oder geraupten Zustand. Im Bereich des vorderen Endes 22 des Füllrohrs 14 wird der Darm 8 abgezogen.

Die Darmfüllvorrichtung 2 weist ferner einen an dem Rahmen 4 der Füllmaschine 1 in einer horizontalen Ebene verschwenkbar angeordneten im wesentlichen L-förmigen Halterahmen 24 auf, an dessen freien Ende eine Darmbremse 26 mit einem Bremsring 28 angeordnet ist, mit deren Hilfe der Darm 8 im Bereich des freien, vorderen Endes 22 des Füllrohrs 14 daran gehindert wird, gedreht zu werden.

Wie die Figuren 2 bis 4 veranschaulichen, ist eine zusammen mit dem Füllrohr 14 drehbare Darmmitnahmeeinrichtung 30 zum Drehen des Darmes 8 axial beweglich relativ zu dem Füllrohr 14 und im wesentlichen formschlüssig mit dem Füllrohr 14 gekoppelt. Durch die formschlüssige Verbindung der Darmmitnahmeeinrichtung mit dem Füllrohr 14 wird bei Drehung des Füllrohrs 14 durch die formschlüssige Verbindung ein Drehmoment auf die Darmmitnahmeeinrichtung 30 übertragen, so daß die Darmmitnahmeeinrichtung 30 zusammen mit dem Füllrohr 14 rotiert wird, während gleichzeitig eine axiale Bewegung der Darmmitnahmeeinrichtung 30 entlang des Füllrohrs 14 möglich ist.

Zur Herstellung der formschlüssigen Verbindung weist das Füllrohr 14 außen zwei gegenüberliegende axial verlaufende Nuten 34 auf, die sich von dem hinteren Bereich 16 bis zum vorderen Bereich 22 des Füllrohrs 14 erstrecken. Die in Form eines Darm-Mitnahmerings ausgebildete Darmmitnahmeeinrichtung weist zwei gegenüberliegende Vorsprünge 32 auf, die jeweils innerhalb einer Nut 34 angeordnet sind und mit dieser zusammenwirken, um eine formschlüssige Verbindung und axiale Führung der Darmmitnahmeeinrichtung 30 bereitzustellen. Die Vorsprünge 32 sind an vorderen Abschnitten von Fixierschrauben 36 ausgebildet. Die Fixierschrauben 36 sind als Madenschrauben ausgebildet, die in Gewindebohrungen eingeschraubt sind, welche an der Mitnahmeeinrichtung 30 ausgebildet sind. In nicht dargestellter Weise können die Madenschrauben mit Hilfe von Konterschrauben gegen unerwünschtes Lösen gesichert sein.

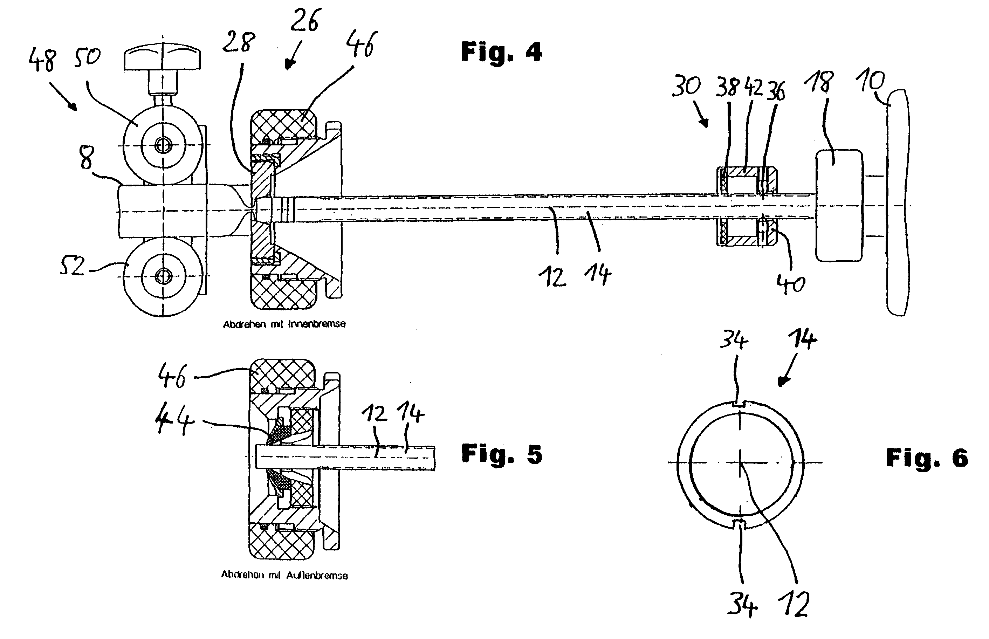

Figur 6 veranschaulicht ein Beispiel für ein Füllrohr 14, das mit Nuten 34 versehen ist, die gegenüberliegend angeordnet sind und sich in Axialrichtung des Füllrohrs 14 erstrecken. Die Form der Nuten 34 kann an die Form der Vorsprünge 32 angepaßt sein. Und so können beispielsweise U- oder V-förmige Nuten vorgesehen sein. Ebenfalls können mehr als zwei Nuten an der Außenseite des Füllrohrs 14 ausgebildet sein, die mit einer entsprechenden Anzahl an der Darmmitnahmeeinrichtung 30 ausgebildeten Vorsprüngen zusammenwirken.

Die in den Figuren 2 bis 4 abgebildete Darmmitnahmeeinrichtung 30 weist ein Andruckmittel 38 auf, das als elastisch verformbarer Klemmring aus Kunststoff ausgebildet ist. Der die Darmmitnahmeeinrichtung 30 bildende Mitnahmering weist einen sich im wesentlichen radial erstreckenden Verbindungsabschnitt 40 auf, der zur Herstellung der formschlüssigen Verbindung zum Füllrohr 14 die die Fixierschrauben 36 aufnehmenden Gewindebohrungen aufweist, sowie einen sich im wesentlichen axial konzentrisch zum Füllrohr 14 erstreckenden Fixierabschnitt auf, der den das Andruckmittel 38 bildenden Klemmring aufnimmt. Zur Aufnahme des Klemmrings ist eine umlaufende Nut an dem Fixierabschnitt 42 ausgebildet.

Figur 3 veranschaulicht den Klemmring im verformten Zustand, indem er reibschlüssig mit dem Darm 8 zusammenwirkt. Der Verbindungsabschnitt 40 und das Andruckmittel 38 sind, wie Figur 3 veranschaulicht, so beabstandet, daß zwischen beiden ein Abschnitt des geraupten Darmes 8 angeordnet ist. Das Andruckmittel 38 sorgt für eine Fixierung des Darms 8 an der Darmmitnahmeeinrichtung 30, so daß ein Drehmoment zum Drehen des Darmes 8 von der Darmmitnahmeeinrichtung 30 auf den Darm 8 übertragen wird.

Die Darmbremse 26 mit Bremsring 28 zum Hindern des Drehens des Darms 8 ist in den Figuren 3 und 4 als sogenannte Innenbremse und in Figur 5 als sogenannte Außenbremse ausgebildet. Bei dem in Figur 5 dargestellten Ausführungsbeispiel liegt ein elastischer Ring 44 an dem Füllrohr 14 an und klemmt den Darm an das Füllrohr 14. Mit Hilfe einer Mutter 46 kann der Bremsring 28 axial verschoben und in unterschiedlichen Stellungen fixiert werden, um den Andruck des Darms 8 an das Füllrohr 14 ändern zu können. In den Figuren 3 und 4 links ist eine Halteeinrichtung 48 zum Halten des gefüllten Darms 8 ortsfest angeordnet. Sie weist zwei Andruckrollen 50, 52 auf, deren Abstand zueinander einstellbar ist.

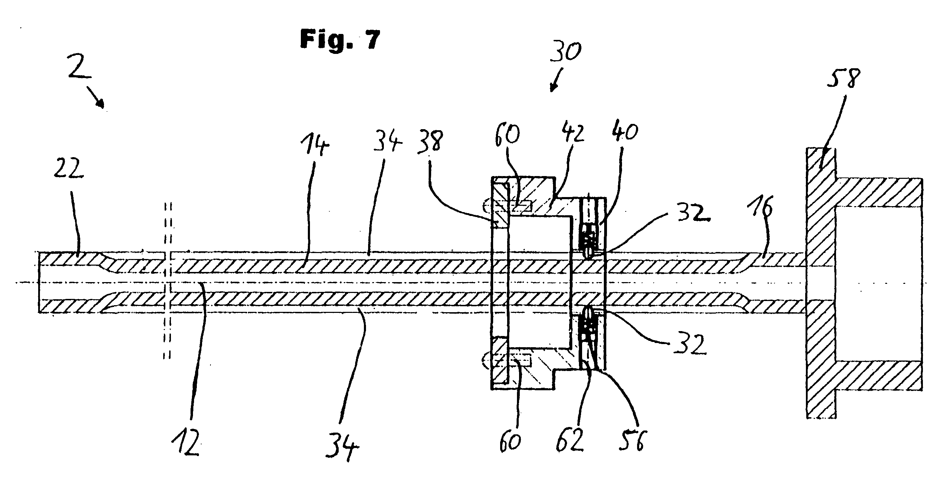

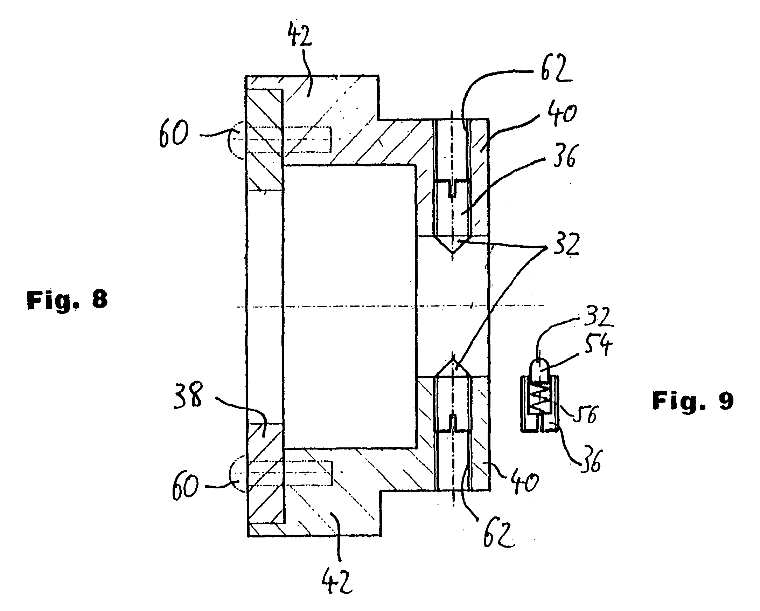

Figur 7 veranschaulicht in einer Schnittdarstellung ein alternatives Ausführungsbeispiel einer Darmfüllvorrichtung 2 mit einer Darmmitnahmeeinrichtung 30, die zwei Vorsprünge 32 aufweist, die mit an dem Füllrohr 14 ausgebildeten Nuten 34 zusammenwirken. Die Vorsprünge 32 sind an beweglichen Stiften 54 ausgebildet, vgl. auch Figur 9, die mittels einer Feder 56 in die Nuten 34 hineingedrückt werden. Die Stifte 50 und die Federn 56 sind an je einer Fixierschraube 36 nach Art einer Madenschraube angeordnet, die in Gewindebohrungen hineingeschraubt sind, welche an der Mitnahmeeinrichtung 30 an den Verbindungsabschnitten 40 ausgebildet sind.

Das Füllrohr 14 ist starr mit einem Rohrflansch 58 verbunden, der mit dem (nicht dargestellten) Abdrehgetriebe gekoppelt ist. Die Nuten 34 erstrecken sich vom vorderen Ende 22 bis zum hinteren Ende 16 des Füllrohrs 14. Das Andruckmittel 38 ist ebenfalls als elastischer Ring ausgebildet und mit Hilfe von Schrauben 60 an dem als Mitnahmering ausgebildeten Darmmitnahmeeinrichtung 30 befestigt.

Die in Figur 8 dargestellte Darmmitnahmeeinrichtung 30 unterscheidet sich von der in Figur 7 dargestellten lediglich dadurch, daß als Madenschrauben ausgebildete Fixierschrauben 36 mit einem spitzen vorderen Abschnitt vorgesehen sind, der jeweils den Vorsprung 32 bildet. Die Fixierschrauben 36 sind in an dem Verbindungsabschnitt 40 des Mitnahmerings ausgebildete Gewindebohrungen 62 geschraubt.

In nicht dargestellter Weise kann eine Einrichtung zur Ermittlung mindestens einer Position der Darmmitnahmeeinrichtung 30 relativ zum Füllrohr 14 vorgesehen sein, mit deren Hilfe die aktuelle Position der Darmmitnahmeeinrichtung 30 oder eine bestimmte Position ermittelt werden kann. Die Positionsermittlungseinrichtung ist vorzugsweise als berührungslos abtastender Sensor oder als mechanischer Schalter ausgebildet und stellt ein Signal bereit, das entweder ein Maß für die aktuelle Position oder ein Maß für die eine bestimmte Position ist. Mit Hilfe des Sensors, der in dem Fall, daß eine bestimmte Position ermittelbar ist, im Bereich des vor deren Endes 22 des Füllrohrs 14 angeordnet ist, kann der das Füllrohr 14 antreibende Antrieb ausgeschaltet werden, wenn die Darmmitnahmeeinrichtung 30 das vordere Ende 22 des Füllrohrs 14 erreicht hat und der Darm 8 weitgehend verbraucht ist.

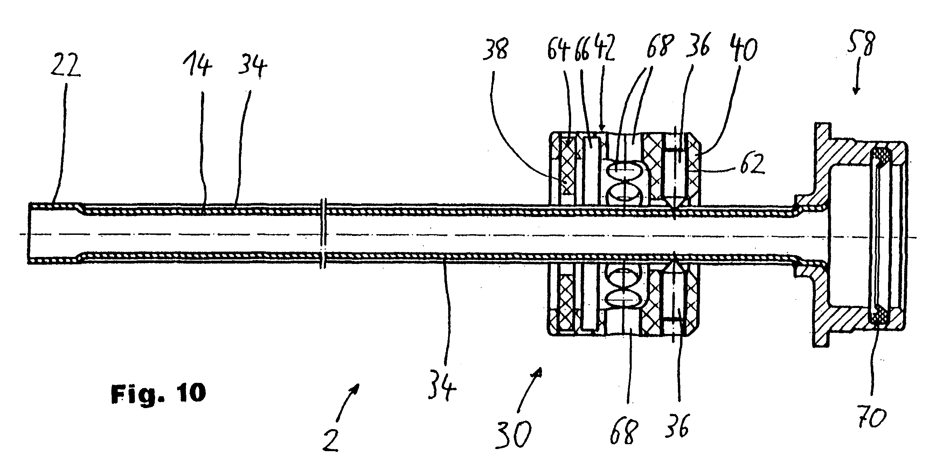

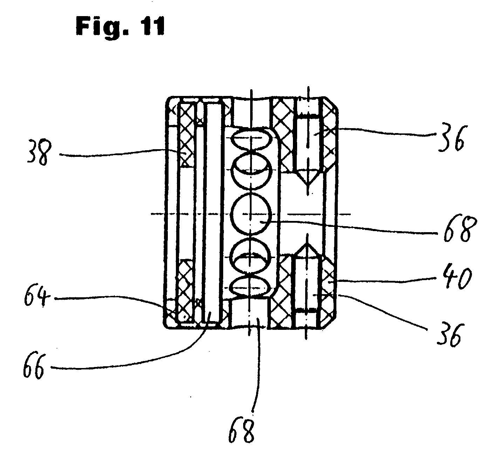

Das in den Fig. 10 und 11 dargestellte alternative Ausführungsbeispiel einer Darmfüllvorrichtung weist konstruktive Gemeinsamkeiten und Ähnlichkeiten auf zu den in den Fig. 7 und 8 dargestellten Ausführungsbeispiel, so daß für funktionsgleiche Teile dieselben Bezugszeichen verwendet worden sind und insoweit zur Vermeidung von Wiederholungen auf die obigen Beschreibungen Bezug genommen wird.

Die Darmmitnahmeeinrichtung 30 in Form eines Mitnahmerings weist eine erste Nut 64 auf, die auf der dem Füllrohr 14 zugewandten Innenseite des Fixierabschnitts 42 des Mitnahmerings ausgebildet ist. Ein elastisches Andruckmittel 38 in Form einer sogenannten Darmhaltelippe ist teilweise innerhalb der Nut 64 angeordnet und in diese eingeklemmt und am Fixierabschnitt 42 befestigt.

Eine weitere Nut 66 ist in dem Fixierabschnitt 42 des Mitnahmerings axial beabstandet von der ersten Nut 64 angeordnet und dient auf die gleiche zuvor beschriebene Weise zur Befestigung eines Andruckelements 38, etwa in Form eines Kollagendarms. Wahlweise kann somit die erste Nut 64 und/oder die zweite Nut 66 zur Befestigung des Andruckelements 38 an dem Mitnahmering befestigt werden.

Mehrere Bohrungen 68 sind gleichmäßig beabstandet zueinander in dem sich im wesentlichen axial erstreckenden Fixierabschnitt 42 des Mitnahmerings ausgebildet. Die Bohrungen 68 dienen als Sichtfenster, so daß von einem Benutzer von außen ein im Innenraum des Mitnahmerings angeordneter geraupter Darm sichtbar ist und somit erkennbar ist, inwieweit er bereits verbraucht worden ist. Ferner ist eine gute Reinigung durch die Bohrungen 68 mittels einer Spülflüssigkeit möglich.

Der Rohrflansch 58 weist eine Nut zur Aufnahme eines Dichtrings 70 mit einer Dichtlippe auf, die gegenüber einem nicht dargestellten Rohrabschnitt abdichtet, durch welchen das zu portionierende Wurstbrät in das Füllrohr 14 eingeleitet wird.

In nicht dargestellter Weise könnte die als Mitnahmering ausgebildete Darmmitnahmeinerichtung 30 aus einem transparenten oder durchsichtigen Kunststoff gefertigt sein, so daß auf Bohrungen 68 verzichtet werden kann und trotzdem von außen der geraupte Darm erkennbar ist. Als transparentes Material könnte beispielsweise Polysulfon verwendet werden.

## Patentansprüche

1. Darmfüllvorrichtung für eine Maschine zum Füllen von Wurst-Därmen,
mit einem um seine Längsachse (12) dreh- und antreibbaren Füllrohr (14), auf das ein durch das Füllrohr (14) befüllbarer Darm (8) aufziehbar ist,
und mit einer gleichzeitig mit dem Füllrohr (14) drehbaren Darmmitnahmeeinrichtung (30) zum Drehen des Darms (8),
**dadurch gekennzeichnet, dass** die Darmmitnahmeeinrichtung (30) axial beweglich relativ zu dem Füllrohr (14) angeordnet und zum Übertragen eines Drehmomentes im wesentlichen formschlüssig mit dem Füllrohr (14) gekoppelt ist.

2. Darmfüllvorrichtung nach Anspruch 1,
**dadurch gekennzeichnet, dass** die Darmmitnahmeeinrichtung (30) mindestens einen Vorsprung (32) und das Füllrohr (14) außen mindestens eine axial verlaufende Nut (34) aufweist, um die formschlüssige und gleichzeitig axial bewegliche Verbindung zwischen Mitnahmering und Füllrohr (14) herzustellen.

3. Darmfüllvorrichtung nach einem der Ansprüche 1 oder 2,
**dadurch gekennzeichnet, dass** die Darmmitnahmeeinrichtung (30) im wesentlichen als ein koaxial zum Füllrohr (14) angeordneter Darm-Mitnahmering ausgebildet ist.

4. Darmfüllvorrichtung nach Anspruch 3,
**dadurch gekennzeichnet, dass** der Mitnahmering im wesentlichen aus einem Kunststoff besteht.

5. Darmfüllvorrichtung nach einem der Ansprüche 3 oder 4,
**dadurch gekennzeichnet, dass** mindestens eine Fixierschraube (36) in den Mitnahmering einschraubbar ist, deren vorderer Abschnitt den Vorsprung bildet und teilweise in der an dem Füllrohr (14) ausgebildeten Nut (34) angeordnet ist.

6. Darmfüllvorrichtung nach Anspruch 5,
**dadurch gekennzeichnet, dass** die Fixierschraube (36) als Madenschraube ausgebildet ist.

7. Darmfüllvorrichtung nach Anspruch 5,
**dadurch gekennzeichnet, dass** die Fixierschraube (36) mittels einer Konterschraube gegen unerwünschtes Lösen gesichert ist.

8. Darmfüllvorrichtung nach mindestens einem der vorhergehenden Ansprüche,
**dadurch gekennzeichnet, dass** die Darmmitnahmeeinrichtung (30) mindestens ein Andruckmittel (38) zum im wesentlichen reibschlüssigen oder formschlüssigen Fixieren des Darms (8) an der Darmmitnahmeeinrichtung (30) aufweist.

9. Darmfüllvorrichtung nach Anspruch 8,
**dadurch gekennzeichnet, dass** das Andruckmittel (38) als elastisch verformbarer Klemmring ausgebildet ist, der vorzugsweise an dem Mitnahmering befestigt ist.

10. Darmfüllvorrichtung nach einem der Ansprüche 8 oder 9,
**dadurch gekennzeichnet, dass** der Mitnahmering einen sich im wesentlichen radial erstreckenden Verbindungsabschnitt (40) zur Herstellung der Verbindung zum Füllrohr (14) und einen sich im wesentlichen axial erstreckenden Fixierabschnitt (42) zur Aufnahme der Andruckmittel (38) zum Fixieren des Darms (8) aufweist.

11. Darmfüllvorrichtung nach Anspruch 10,
**dadurch gekennzeichnet, dass** in dem sich im wesentlichen axial erstreckenden Fixierabschnitt (42) auf der dem Füllrohr (14) montierten Zustand zugewandten Innenseite eine Nut (64) zur Aufnahme des Andruckmittels (38) angeordnet ist.

12. Darmfüllvorrichtung nach Anspruch 10 oder 11,
**dadurch gekennzeichnet, dass** eine weitere Nut (66) auf der dem Füllrohr (14) zugewandten Innenseite des Fixierabschnitts (42) angeordnet ist.

13. Darmfüllvorrichtung nach Anspruch 10,
**dadurch gekennzeichnet, dass** der Fixierabschnitt (42) mindestens eine Durchgangsbohrung (68) als Sichtfenster aufweist.

14. Darmfüllvorrichtung nach einem der vorhergehenden Ansprüche,
**gekennzeichnet durch** eine im Bereich des freien Endes des Füllrohrs (14) angeordnete Darmbremse (26) zum Hindern des Drehens des Darmes (8) in diesem Bereich.

15. Darmfüllvorrichtung nach Anspruch 14,
**dadurch gekennzeichnet, dass** die Darmbremse (26) einen mit dem Füllrohr (14) zusammenwirkenden Bremsring (28) aufweist.

16. Darmfüllvorrichtung nach Anspruch 15,
**dadurch gekennzeichnet, dass** der Bremsring (28) einen elastischen Lippenabschnitt oder einen konischen Einschnürabschnitt aufweist.

17. Darmfüllvorrichtung, nach einem der vorstehenden Ansprüche,
**gekennzeichnet durch** eine Einrichtung zur Ermittlung mindestens einer Position der Darmmitnahmeeinrichtung (30) relativ zum Füllrohr (14).

18. Darmfüllvorrichtung nach Anspruch 17,
**dadurch gekennzeichnet, dass** die Positionsermittlungseinrichtung einen berührungslos abtastenden Sensor aufweist, der auf die Darmmitnahmeeinrichtung (30) anspricht.

19. Darmmitnahmeeinrichtung nach Anspruch 18,
**dadurch gekennzeichnet, dass** der Sensor im Bereich des vorderen, die Austrittsöffnung (23) für Wurstbrät aufweisenden Ende des Füllrohrs (14) ortsfest angeordnet ist und ein Signal bereitstellt, mit dessen Hilfe der Antrieb des Füllrohrs (14) unterbrochen werden kann.

20. Maschine zum Füllen von Wurst-Därmen,
mit einem Vorratsbehälter für Wurstbrät,
einer mit dem Vorratsbehälter verbundenen Fördervorrichtung zum Fördern von Würstbrät und mit einer Darmfüllvorrichtung (2), die ein um seine Längsachse (12) dreh- und antreibbares Füllrohr (14), auf das ein durch das Füllrohr (14) befüllbarer Darm (8) aufziehbar ist, und eine gleichzeitig mit dem Füllrohr (14) drehbare Darmmitnahmeeinrichtung (30) zum Drehen des Darms (8) aufweist,
**dadurch gekennzeichnet, dass** die Darmmitnahmeeinrichtung (30) axial beweglich relativ zu dem Füllrohr (14) angeordnet und zum Übertragen eines Drehmomentes im wesentlichen formschlüssig mit dem Füllrohr (14) gekoppelt ist.

21. Maschine nach Anspruch 20,
**dadurch gekennzeichnet, dass** die Darmmitnahmeeinrichtung (30) nach mindestens einem der vorstehenden Ansprüche 1 bis 19 ausgebildet ist.

## Claims

1. Casing-filling arrangement for a machine for filling sausage casings, having a filling tube (14) which is drivable and rotatable about its own longitudinal axis (12) and onto which a casing (8) fillable through the filling tube (14) can be drawn, and having a casing entrainment means (30) for rotating the casing (8), which means (30) is rotatable simultaneously with the filling tube (14), **characterised in that** the casing entrainment means (30) is arranged to be movable axially relative to the filling tube (14) and, to allow a torque to be transmitted, is coupled to the filling tube (14) substantially by positive interengagement.

2. Casing-filling arrangement according to claim 1, **characterised in that** the casing entrainment means (30) has at least one projection (32) and the filling tube (14) has on the outside at least one axially extending groove (34), to allow the positively interengaged but at the same time axially movable connection to be made between an entrainment ring and the filling tube (14).

3. Casing-filling arrangement according to either of claims 1 and 2, **characterised in that** the casing entrainment means (30) is substantially in the form of a casing entrainment ring arranged co-axially to the filling tube (14)

4. Casing-filling arrangement according to claim 3, **characterised in that** the entrainment ring is composed substantially of a plastics material.

5. Casing-filling arrangement according to either of claims 3 and 4, **characterised in that** at least one locating screw (36) can be screwed into the entrainment ring, the front portion of which locating screw (36) forms the projection and is arranged partly in the groove (34) formed in the filling tube (14).

6. Casing-filling arrangement according to claim 5, **characterised in that** the locating screw (36) is in form of a grub screw.

7. Casing-filling arrangement according to claim 5, **characterised in that** the locating screw (36) is secured against coming loose when this is not desired by means of a locking screw.

8. Casing-filling arrangement according to at least one of the foregoing claims, **characterised in that** the casing entrainment means (30) has at least one pressure-applying means (38) for securing the casing (8) against the casing entrainment means (30) substantially by frictional engagement or positive interengagement.

9. Casing-filling arrangement according to claim 8, **characterised in that** the pressure-applying means (38) is in the form of an elastically deformable clamping ring which is preferably fastened to the entrainment ring.

10. Casing-filling arrangement according to either of claims 8 and 9, **characterised in that** the entrainment ring has a connecting portion (40), extending substantially radially, for making the connection to the filling tube (14), and a securing portion (42), extending substantially axially, to receive the pressure-applying means (38) for securing the casing (8).

11. Casing-filling arrangement according to claim 10, **characterised in that** a groove (64) for receiving the pressure-applying means (38) is arranged in the substantially axially extending securing portion (42), on the inner side which is adjacent the filling tube (14) in the fitted state.

12. Casing-filling arrangement according to claim 10 or 11, **characterised in that** a further groove (66) is arranged on the inner side of the securing portion (42), which inner side is adjacent the filling tube (14).

13. Casing-filling arrangement according to claim 10, **characterised in that** the securing portion (42) has at least one hole (68) passing through it to act as an inspection window.

14. Casing-filling arrangement according to one of the foregoing claims, **characterised by** a casing brake (26), arranged in the region of the free end of the filling tube (14), to hamper the rotation of the casing (8) in this region

15. Casing-filling arrangement according to claim 14, **characterised in that** the casing brake (26) has a braking ring (28) which co-operates with the filling tube (14).

16. Casing-filling arrangement according to claim 15, **characterised in that** the braking ring (28) has an elastic lip portion or a portion which narrows in a taper.

17. Casing-filling arrangement according to one of the foregoing claims, **characterised by** a means for determining at least one position of the casing entrainment means (30) relative to the filling tube (14).

18. Casing-filling arrangement according to claim 17, **characterised in that** the means for determining position has a sensor which scans without contact and which responds to the casing entrainment means (30).

19. Casing entrainment means according to claim 18, **characterised in that** the sensor is arranged in a fixed position in the region of the front end of the filling tube (14), which end has the outlet opening for sausage meat, and produces a signal by means of which the drive to the filling tube (14) can be interrupted.

20. Machine for filling sausage casings, having a supply container for sausage meat, a feeding arrangement, connected to the supply container, for feeding sausage meat, and having a casing-filling arrangement (2) which has a filling tube (14) which is drivable and rotatable about its own longitudinal axis (12) and onto which a casing (8) fillable through the filling tube (14) can be drawn, and which has a casing entrainment means (30) for rotating the casing (8), which means (30) is rotatable simultaneously with the filling tube (14), **characterised in that** the casing entrainment means (30) is arranged to movable axially relative to the filling tube (14) and, to allow a torque to be transmitted, is coupled to the filling tube (14) substantially by positive interengagement.

21. Machine according to claim 20, **characterised in that** the casing entrainment means (30) is of the form claimed in at least one of the foregoing claims 1 to 19.

## Revendications

1. Dispositif de remplissage de boyau pour une machine de remplissage de boyaux de chair à saucisses, avec un tuyau de remplissage (14) actionnable et pivotant autour de son axe longitudinal (12), tuyau sur lequel vient s'appliquer un boyau (8) passant par le tuyau de remplissage (14), lequel boyau peut être rempli,
et avec un dispositif d'entraînement du boyau (30) pivotant en même temps que le tuyau de remplissage (14) afin de faire tourner le boyau (8),
**caractérisé en ce que** le dispositif d'entraînement du boyau (30) est disposé dans l'axe par rapport au tuyau de remplissage (14) d'une manière relativement mobile et est raccordé, essentiellement par un système mécanique, au tuyau de remplissage (14) afin de transmettre un couple de rotation.

2. Dispositif de remplissage de boyau selon la revendication 1,
**caractérisé en ce que** le dispositif d'entraînement du boyau (30) comporte au moins une saillie (32) et que le tuyau de remplissage (14) comporte à l'extérieur au moins une rainure (34) s'étendant le long de l'axe afin de générer la liaison mécanique et simultanément se mouvant dans l'axe entre l'anneau d'entraînement et le tuyau de remplissage (14).

3. Dispositif de remplissage de boyau selon l'une quelconque des revendications 1 ou 2,
**caractérisé en ce que** le dispositif d'entraînement du boyau (30) est formé pour l'essentiel d'un anneau d'entraînement du boyau adapté en coaxial au tuyau de remplissage (14).

4. Dispositif de remplissage de boyau selon la revendication 3,
**caractérisé en ce que** l'anneau d'entraînement est composé essentiellement d'une matière plastique.

5. Dispositif de remplissage de boyau selon l'une quelconque des revendications 3 ou 4,
**caractérisé en ce qu'**au moins une vis de fixation (36) peut être vissée dans l'anneau d'entraînement et dont la partie avant forme la saillie et qui est partiellement adaptée à la rainure (34) formée dans le tuyau de remplissage (14).

6. Dispositif de remplissage de boyau selon la revendication 5,
**caractérisé en ce que** la vis de fixation (36) est formée comme un goujon fileté.

7. Dispositif de remplissage de boyau selon la revendication 5,
**caractérisé en ce que** la vis de fixation (36) est bloquée, au moyen d'un contre-écrou, pour empêcher un dévissage indésirable.

8. Dispositif de remplissage de boyau selon au moins l'une quelconque des précédentes revendications,
**caractérisé en ce que** le dispositif d'entraînement du boyau (30) comporte au moins un moyen de pression (38) destiné essentiellement à fixer mécaniquement ou par frottement le boyau (8) sur le dispositif d'entraînement du boyau (30).

9. Dispositif de remplissage de boyau selon la revendication 8,
**caractérisé en ce que** le moyen de pression (38) est formé d'un anneau d'une bague de serrage élastique et déformable et qu'il est de préférence fixé sur l'anneau d'entraînement.

10. Dispositif de remplissage de boyau selon l'une quelconque des revendications 8 ou 9,
**caractérisé en ce que** l'anneau d'entraînement comporte une pièce de raccordement (40) s'étendant essentiellement de manière radiale pour générer la liaison avec le tuyau de remplissage (14) et une pièce de fixation (42) s'étendant essentiellement dans l'axe pour entraîner le moyen de pression (38) afin de fixer le boyau (8).

11. Dispositif de remplissage de boyau selon la revendication 10,
**caractérisé en ce qu'**une rainure (64) est disposée dans la pièce de fixation (42) s'étendant essentiellement dans l'axe sur la face interne, laquelle est orientée, en état de montage, vers le tuyau de remplissage (14), afin d'entraîner le moyen de pression (38).

12. Dispositif de remplissage de boyau selon la revendication 10 ou 11,
**caractérisé en ce qu'**une rainure supplémentaire (66) est disposée sur la face interne de la pièce de fixation (42), laquelle est orientée vers le tuyau de remplissage (14).

13. Dispositif de remplissage de boyau selon la revendication 10,
**caractérisé en ce que** la pièce de fixation (42) comporte au moins un trou de passage (68) servant de fenêtre d'inspection.

14. Dispositif de remplissage de boyau selon l'une quelconque des précédentes revendications,
**caractérisé par** un frein de boyau (26) disposé dans la zone de l'extrémité libre du tuyau de remplissage (14) afin d'empêcher dans cette zone la rotation du boyau (8).

15. Dispositif de remplissage de boyau selon la revendication 14,
**caractérisé en ce que** le frein de boyau (26) comporte une bague de frein (28) agissant conjointement avec le tuyau de remplissage (14).

16. Dispositif de remplissage de boyau selon la revendication 15,
**caractérisé en ce que** la bague de frein (28) comporte une section à lèvres élastique ou une section d'étranglement conique.

17. Dispositif de remplissage de boyau selon l'une quelconque des revendications précédentes,
**caractérisé par** un dispositif pour déterminer au moins une position du dispositif d'entraînement du boyau (30) par rapport au tuyau de remplissage (14).

18. Dispositif de remplissage de boyau selon la revendication 17,
**caractérisé en ce que** le dispositif de détermination de position comporte un détecteur à balayage, sans contact, qui réagit en fonction du dispositif d'entraînement du boyau (30).

19. Dispositif de remplissage de boyau selon la revendication 18,
**caractérisé en ce que** le détecteur est fixé à demeure dans la zone avant de l'extrémité du tuyau de remplissage (14), lequel comporte l'orifice de sortie (23) de la chair à saucisses et qu'un signal est mis à disposition, lequel signal permet que le fonctionnement du tuyau de remplissage (14) se déroule sans interruption.

20. Machine pour le remplissage de boyaux de chair à saucisses,
avec une trémie pour la chair à saucisses,
un dispositif de convoyage relié à la trémie afin de transporter la chair à saucisses et avec un dispositif de remplissage de boyau (2) qui comporte un tuyau de remplissage (14) actionnable et pivotant autour de son axe longitudinal (12), sur lequel peut être positionné un boyau (8) pouvant être rempli au moyen du tuyau de remplissage (14) et un dispositif d'entraînement du boyau (30) pivotant simultanément avec le tuyau de remplissage (14) afin de faire tourner le boyau (8),
**caractérisée en ce que** le dispositif d'entraînement du boyau (30) est disposé de manière mobile par rapport au tuyau de remplissage (14) et **en ce qu'**il est raccordé essentiellement par un moyen mécanique au tuyau de remplissage (14) afin de transmettre un couple de rotation.

21. Machine selon la revendication 20,
**caractérisée en ce que** le dispositif d'entraînement du boyau (30) est formé selon au moins l'une quelconque des revendications précédentes 1 à 19.
